# FASCICULE DE BREVET EUROPEEN

(11) **EP 0 255 445 B1**
(45) Date de publication et mention de la délivrance du brevet: **13.01.1993**
(21) Numéro de dépôt: 87401780.9
(22) Date de dépôt: 30.07.1987
(51) Int. Cl.: C08J 7/18, C08F 291/18

(54) **Procédé de fabrication de copolymères greffés au moyen de faisceaux d'ions hautement énergétiques et produits obtenus**
Verfahren zur Herstellung von Pfropfcopolymeren mittels eines Hochenergie-Ionenstrahls, sowie die erhaltenen Produkte
Process for the production of graft-copolymers by irradiation with high energy ions, and products obtained thereby

(30) Priorité: 31.07.1986 FR 8611129
(43) Date de publication de la demande: 03.02.1988
(73) Titulaire: COMMISSARIAT A L'ENERGIE ATOMIQUE, 75015 Paris Cédex 15 (FR)
(72) Inventeur: Balanzat, Emmanuel, F-14000 Caen (FR); Boiziau, Claude, F-91300 Massy (FR); Darnez, Charles, F-33200 Bordeaux Cauderan (FR); Duraud, Jean-Paul, F-94200 Ivry Sur Seine (FR); Le Moel, Alain, F-92370 Chaville (FR)
(74) Mandataire: Mongrédien, André

(56) Documents cités:
- EP-A- 214 880
- DE-A- 1 720 449
- FR-A- 2 166 027
- FR-A- 2 211 506
- US-A- 3 488 268

## Description

La présente invention se rapporte à un procédé de fabrication de copolymères greffés ayant une structure anisotrope contrôlée grâce à l'emploi de faisceaux d'ions lourds hautement énergétiques ; elle se rapporte également aux produits obtenus qui se présentent généralement sous la forme de membranes ayant des applications multiples.

On connaît par le document US-A- 3 488 268 un procédé de fabrication de copolymères greffés utilisant des radiations ionisantes de 0,01 à 160Mrad avec des polymères de condensation linéaires azotés.

Ce document mentionne la possibilité d'utiliser des particules telles que des protons ou des deutérons, mais il ne prévoit pas d'utiliser des faisceaux d'ions hautement énergétiques, par exemple d'au moins 1MeV par unité de masse atomique.

L'irradiation au moyen d'ions énergétiques est une technique connue qui est décrite en particulier dans une publication intitulée "Review of Modern Physics, volume 55 n° 4, Octobre 1983, pages 907 à 941".

Un ion fortement énergétique (énergie supérieure à 1 MeV par nucléon) produit, dans la matière qu'il traverse, une trace correspondant à une perturbation intense du matériau ; le diamètre de cette trace latente est compris entre 1 et 100 nm.

Dans un polymère, cette perturbation se traduit par des modifications chimiques, électroniques et structurales de l'architecture intra et inter-moléculaire du polymère ; elle conduit en particulier à la formation de macro-radicaux libres, c'est-à-dire à la formation de sites actifs localisés. La nature et la densité de ces sites dépendent du matériau irradié, de la particule utilisée, de son énergie primaire, et de sa perte d'énergie dans le polymère (cette perte d'énergie dépend en particulier de l'épaisseur du matériau irradié, la densité de perte évoluant le long de la trajectoire de façon plus ou moins importante suivant la nature et l'énergie de l'ion).

La présente invention met à profit l'existence de ces sites actifs pour effectuer le greffage de molécules organiques sur la surface ou dans le volume du polymère et obtenir ainsi une copolymérisation strictement localisée le long de la trajectoire des ions.

La présente invention a pour objet un procédé de fabrication de copolymères greffés ayant une structure anisotrope greffée obtenus en faisant réagir entre eux au moins un polymère et un monomère ou un oligomère sous l'effet de faisceaux d'ions de haute énergie.

Selon un premier mode de réalisation de ce procédé, celui-ci comprend les étapes successives suivantes :
a) immersion du polymère dans une solution de monomère ou d'oligomère pendant plusieurs heures ou mise en présence du polymère dans une cellule avec le monomère ou l'oligomère pouvant se présenter sous forme liquide ou gazeuse,
b) irradiation de l'ensemble au moyen d'un faisceau d'ions énergétiques d'au moins 1 MeV/u.m.a, choisis parmi l'oxygène, le néon, l'argon, le xénon, le krypton et l'uranium, à une fluence comprise entre 10⁸ et 10¹⁴ ions/cm², à une température maintenue constante durant le temps d'irradiation,
c) séparation du monomère n'ayant pas réagi au moyen d'un solvant.

Selon un second mode de réalisation de ce procédé, celui-ci comprend les étapes successives suivantes :
a) irradiation du polymère au moyen d'un faisceau d'ions énergétique d'au moins 1 MeV/u.m.a, choisis parmi l'oxygène, le néon, l'argon, le xénon, le krypton et l'uranium, à une fluence comprise entre 10⁸ et 10¹⁴ ions/cm², à une température maintenue constante durant le temps d'irradiation, et
b) immersion du polymère ainsi irradié dans une solution de monomère ou d'oligomère pendant plusieurs heures ou mise en présence du polymère ainsi irradié dans une cellule avec le monomère ou l'oligomère pouvant se présenter sous forme liquide ou gazeuse.

Ainsi, le greffage peut être effectué simultanément en cours d'irradiation ou dans une seconde étape en mettant en présence le monomère et le polymère irradié. On tiendra compte dans ce second cas de la durée de vie des espèces actives créées au cours de l'irradiation. Cette durée de vie est elle-même fonction du polymère support, de l'environnement du potymère durant l'irradiation et pendant son stockage. L'irradiation est effectuée au moyen d'ions à haute énergie choisis parmi l'oxygène, le néon, l'argon, le xénon, le krypton et l'uranium.

La densité de transformation est fonction de la fluence de l'irradiation.

Cette opération peut être reproduite en modifiant les conditions de réalisation : nature, énergie et fluence des ions, nature et composition de la phase à greffer.

Les propriétés du copolymère ainsi réalisé dépendront de la nature du polymère et de celles des greffons. Ces derniers pourront d'ailleurs être de nature unique ou multiple, soit que l'opération ait été réalisée en une fois (mélange de monomères) ou en plusieurs fois, à l'issue d'irradiations successives en présence de monomères différents.

Ces greffons peuvent ainsi être fonctionnalisés dans une étape ultérieure, par voie chimique, électrochimique ou par irradiation.

Ces greffons peuvent aussi, suivant la technique utilisée, être greffés soit tout le long de la trajectoire des ions (greffage en canaux), soit à la surface du polymère, à l'emplacement de l'entrée et de la sortie de l'ion (greffage en surface), l'orientation des molécules à greffer pouvant être pilotée par application d'un champ électrique ou magnétique. Dans ce dernier cas, notamment, il y aura avantage à greffer des monomères ou oligomères ayant une structure de cristal liquide.

Il est possible de traiter selon la présente invention tout polymère thermoplastique ou thermodurcissable, pouvant se présenter sous forme de film, de feuille et/ou de plaque.

Ainsi à titre d'exemples non limitatifs on peut citer : les polyoléfines et leurs dérivés, les polydiéniques et leurs copolymères, les polymères halogénocarbonés et leurs copolymères (tels que le polychlorure et polyfluorure de vinyle, polytétrafluoroéthylène, polyfluorure et polychlorure de vinylidène) les polyesters (tels que le polyacrylate et polyméthacrylate de méthyle) le polystyrène et ses dérivés, le polyacrylonitrile et ses dérivés, les polyamides, les polyimides et en particulier le polyétherimide, les polysulfones, les polysulfures comme le polysulfure de phénylène, les polycétones telles que les polyéther cétones, les polysiloxanes, les polyépoxydes, les polyuréthanes ainsi que la cellulose et ses dérivés.

Les monomères susceptibles d'être utilisés pour modifier les propriétés des polymères supports peuvent être choisis dans le groupe des hydrocarbures et/ou hydrocarbures halogénés comprenant au moins une insaturation et, éventuellement, un groupement supplémentaire déjà fonctionnalisé ou fonctionnalisable au cours d'une étape ultérieure.

A titre d'exemple non limitatif, on peut citer par exemple : l'éthylène, le tétrafluoroéthylène et leurs dérivés, le butadiène et ses dérivés, le styrène et ses dérivés, l'acrylamide et ses dérivés, l'acrylonitrile et l'allyl glycidyl éther, les isomères de la vinyl pyridine et leurs dérivés, les esters de l'acide acrylique et de l'acide méthacrylique, et en particulier, le méthacrylate d'hydroxyéthyle ainsi que le méthacrylate de diméthylamino éthyle, la N-vinyl pyrrolidone, la N-vinyl caprolactam...

L'invention est illustrée à l'aide de plusieurs exemples de réalisation donnés ci-après à titre nullement limitatif.

### Exemple 1

Une feuille de PVDF de 25 µm d'épaisseur est placée dans une cellule remplie de styrène et soumise à un faisceau d'ions Kr de 3 800 MeV et à une fluence de 1,4 x 10¹⁰ ions cm⁻², à une dose intégrée de 9,33.10⁴ Gy (9,33 Mrads) à 28°C. Après irradiation le monomère résiduel et l'homopolymère formé sont élimés par extraction dans du toluène. La présence des greffons styrène est confirmée par spectroscopie d'absorption infra-rouge.

### Exemple 2

Une feuille de PVDF de 50 µm d'épaisseur est placée dans une cellule remplie de styrène et soumise à un faisceau d'ions Kr de 3 800 MeV et à une fluence de 3,80 x 10¹⁰ ions cm⁻², à une dose intégrée de 25,3.10⁴ Gy (25,3 Mrads) à 28°C. Après irradiation, le monomère résiduel et l'homopolymère formé sont éliminés par extraction dans du toluène. La présence des greffons styrène est confirmée par spectroscopie d'adsorption infra-rouge.

### Exemple 3

Une feuille de PVDF de 25 µm d'épaisseur est placée dans une cellule remplie de styrène et soumise à un faisceau d'ions oxygène de 800 MeV, à une fluence de 3,64 x 10¹⁰ ions cm⁻², à une dose intégrée de 11,7.10⁴ Gy (11,7 Mrads) et à 28°C. Après irradiation, le monomère résiduel et l'homopolymère formés sont éliminés par extraction dans du toluène. La présence de greffons de styrène est confirmée par spectroscopie d'absorption I.R. et par spectroscopie de photoémission X (XPS).

### Exemple 4

Une feuille de PVDF de 50 µm d'épaisseur est placée dans une cellule remplie de styrène et soumise à un faisceau d'ions oxygène de 800 MeV, à une fluence de 9,8 x 10¹¹ ions cm⁻², à une dose intégrée de 31,56.10⁴ Gy (31,56 Mrads) et à 28°C. Après irradiation, le monomère résiduel et l'homopolymère formés sont éliminés par extraction dans du toluène. La présence de greffons de styrène est confirmée par spectroscopie d'absorption, I.R. et par spectroscopie de photoémission X (XPS).

### Exemple 5

Une feuille de PVDF de 25 µm d'épaisseur est immergée pendant 48 heures dans du styrène contenu dans une ampoule scellée. L'échantillon est ensuite positionné dans une cellule d'irradiation et soumis à un faisceau d'ions Kr de 3 800 MeV à une fluence de 3,3 x 10⁹ ions/cm², à une dose intégrée de 2,2.10⁴ Gy (2,2 Mrads). La température durant l'expérience ne dépasse pas 50°C. Après irradiation, l'échantillon est soumis à une extraction par le toluène afin d'éliminer le monomère résiduel et l'homopolymère. Le greffage du styrène, en surface et en volume, a été mis en évidence par spectroscopie de photoémission X (XPS) et par spectroscopie I.R. (IRAS).

### Example 6

La même expérience a été réalisée sur des films de 50 µm d'épaisseur avec des ions oxygène de 800 MeV. La fluence était de 2,4 x 10¹² ions/cm², la dose intégrée de 77,3.10⁴ Gy (77,3 Mrads), la température maintenue à 23°C.

### Exemple 7

Une feuille de PTFE de 50 µm d'épaisseur est placée dans une cellule remplie de styrène et soumise à un faisceau d'ions Kr (3 800 MeV) à une fluence de 1,30 x 10¹¹ ions/cm², à une dose intégrée de 97.10⁴ Gy (97 Mrads), à une température ne dépassant pas 50°C. Après irradiation, le monomère résiduel et l'homopolymère formé sont éliminés par extraction dans du toluène. La présence de greffons de styrène est confirmée par spectroscopie d'absorption I.R.

### Exemple 8

Une feuille de PTFE de 50 µm d'épaisseur est placé dans une cellule remplie d'acrylonitrile distillé sous pression réduite (65°C à P = 66,64 MPa). La cellule est irradiée avec des ions Kr de 3 800 MeV à une fluence de 1,3 x 10¹¹ ions/cm² à une dose intégrée de 78.10⁴ Gy (78 Mrads) à une température ne dépassant pas 50°C. Après irradition, le film est nettoyé dans de l'acétonitrile à reflux. La présence de greffons d'acrylonitrile est confirmée par spectroscopie d'absorption I.R.

### Exemple 9

Un film d'éthylène-propylène fluoré (Téflon FEP)^{R}de 25 µm est placé dans une cellule remplie de styrène et est soumis à un faisceau d'ions Kr de 3 800 MeV (fluence 9,9 x 10¹¹ ions/cm², dose : 26.10⁴ Gy(26 Mrads)). La température est maintenue inférieure à 50°C. Après irradiation, le film de téflon FEP est nettoyé par extraction dans du xylène. La présence de greffons de styrène est confirmée par spectroscopie d'absorption I.R.

### Exemple 10

Un film de 50 µm d'épaisseur d'éthylène-tétrafluoroéthylène copolymère (Aflon COP®) est placé dans une cellule remplie de butadiène. Cette cellule est soumise à des ions oxygène de 800 MeV, à une fluence de 3,64 x 10¹⁰ ions/cm² à une dose intégrée de 12.10⁴ Gy (12 Mrads). La température est rigoureusement maintenue, par circuit de refroidissement, inférieure à 30°C. Après irradiation, le film d'Aflon COP® est lavé dans du benzène, à froid. La présence de greffons de butadiène est confirmée par spectroscopie d'absorption I.R. et par spectroscopie de photoélectrons X (AlKα).

### Exemple 11

Une feuille de chlorure de polyvinylidène de 50 µm d'épaisseur est placée dans une cellule remplie d'hexachloroprène deshydraté sur tamis moléculaire. Celle cellule est irradiée par des ions Kr de 3 800 MeV fluence 3,3 x 10⁹ ions/cm² à une dose intégrée de 2,6.10⁴ Gy (2,6 Mrads). La température durant l'irradiation est maintenue inférieure à 50°C. Après irradiation, la feuille de PVCℓ₂ est rincée dans du chloroforme à reflux. Le greffage du monomère hexachloroprène a été mis en évidence par spectroscopie d'absorption I.R.

Les produits résultant du greffage se présentent généralement sous forme de membranes et trouvent des applications dans une gamme de domaines très étendue telle que :
- perméation,
- filtration,
- osmose,
- catalyse,
- purification,
- réalisation d'alliages de polymères,
- blocage de molécules biologiques (tels que des systèmes immuno enzymatiques),
- écrans plats.

On conçoit aisément que le nombre des copolymères greffés que l'on peut obtenir selon l'invention est immense puisqu'il est possible de faire varier à l'infini le nombre des combinaisons entre polymères et monomères ainsi que le nombre et la valeur des paramètres susceptibles d'influencer le cours des réactions chimiques.

On peut de plus modifier les monomères greffés sur le polymère par fonctionnalisation et adjonction d'autres éléments, par exemple dans le cas du styrène par sulfonation suivie d'un remplacement des atomes d'hydrogène par un métal tel que le cuivre.

## Revendications

1. Procédé de fabrication de copolymère greffés ayant une structure anisotrope greffée obtenus en faisant réagir entre eux au moins un polymère et un monomère ou un oligomère sous l'effet de faisceaux d'ions de haute énergie, procédé comprenant les étapes successives suivantes :
a) immersion du polymère dans une solution de monomère ou d'oligomère pendant plusieurs heures ou mise en présence du polymère dans une cellule avec le monomère ou l'oligomère pouvant se présenter sous forme liquide ou gazeuse,
b) irradiation de l'ensemble au moyen d'un faisceau d'ions énergétiques d'au moins 1 MeV/u.m.a, choisis parmi l'oxygène, le néon, l'argon, le xénon, le krypton et l'uranium, à une fluence comprise entre 10⁸ et 10¹⁴ ions/cm², à une température maintenue constante durant le temps d'irradiation,
c) séparation du monomère n'ayant pas réagi au moyen d'un solvant (u.m.a. = unité de masse atomique).

2. Procédé de fabrication de copolymère greffés ayant une structure anisotrope greffée obtenus en faisant réagir entre eux au moins un polymère et un monomère ou un oligomère sous l'effet de faisceaux d'ions de haute énergie, procédé comprenant les étapes successives suivantes :
a) irradiation du polymère au moyen d'un faisceau d'ions énergétique d'au moins 1 MeV/u.m.a, choisis parmi l'oxygène, le néon, l'argon, le xénon, le krypton et l'uranium, à une fluence comprise entre 10⁸ et 10¹⁴ ions/cm², à une température maintenue constante durant le temps d'irradiation, et
b) immersion du polymère ainsi irradié dans une solution de monomère ou d'oligomère pendant plusieurs heures ou mise en présence du polymère ainsi irradié dans une cellule avec le monomère ou l'oligomère pouvant se présenter sous forme liquide ou gazeuse.

3. Procédé selon l'une quelconque des revendications précédentes, caractérisé en ce que le polymère se présente sous forme de film, de feuille ou de plaque et est choisi parmi les polyoléfines et leurs dérivés, les polydiéniques et leurs copolymères, les polymères halogénocarbonés et leurs copolymères, les polyesters, le polystyrène et ses dérivés, le polyacrylonitrile et ses dérivés, les polyamides, les polyimides, les polysulfones, les polysulfures, les polycétones, les polyéther-cétones, les polysiloxanes, les polyépoxydes, les polyuréthanes, la cellulose et ses dérivés.

4. Procédé selon la revendication 3, caractérisé en ce que le polymère est choisi parmi le polychlorure de vinyle, le polyfluorure de vinyle, le polytétrafluoroéthylène, le polyfluorure de vinylidène, le polychlorure de vinylidène, le polyacrylate de méthyle, le polyméthacrylate de méthyle, le polyétherimide et le polysulfure de phénylène.

5. Procédé selon l'une quelconque des revendications précédentes, caractérisé en ce que le monomère est choisi dans le groupe des hydrocarbures et/ou des hydrocarbures halogénés comprenant au moins un insaturation et éventuellement un groupe supplémentaire déjà fonctionnalisé ou fonctionnalisable au cours d'une étape ultérieure.

6. Procédé selon la revendication 5, caractérisé en ce que le monomère est choisi parmi : l'éthylène, le tétrafluoroéthylène et leurs dérivés, le butadiène et ses dérivés, le styrène et ses dérivés, l'acrylamide et ses dérivés, l'acrylonitrile, l'allyl glycidyl éther, la vinyl pyridine et ses dérivés, les esters de l'acide acrylique et de l'acide méthacrylique, la N-vinyl pyrolydone et la N-vinyl caprolactam.

7. Procédé selon la revendication 6, caractérisé en ce que le monomère est le méthacrylate d'hydroxyéthyle ou le méthacrylate de diméthyl aminoéthyle.

8. Procédé selon la revendication 1, caractérisé en ce que le solvant utilisé pour séparer le monomère est du toluène, du xylène, du benzène ou de l'acétonitrile.

9. Procédé selon l'une quelconque des revendications 1 et 2, caractérisé en ce que la dose intégrée est de l'ordre de 10³ à 10⁷ Gy (10⁻¹ à 10³ Mrads).

10. Procédé selon l'une quelconque des revendications 1 et 2, caractérisé en ce que les greffons fixés sur les polymères ont des fonctions susceptibles d'être modifiées par voie chimique, électrochimique ou par irradiation.

11. Procédé selon l'une quelconque des revendications 1 à 10, caractérisé en ce que le polymère est sous la forme de film, de feuille ou de plaque.

## Claims

1. Process for the production of grafted copolymers having a grafted anisotropic structure obtained by reacting with one another at least one polymer and a monomer or oligomer under the effect of high energy ion beams, comprising the following successive stages:
a) immersion of the polymer in a solution of the monomer or oligomer for several hours or bringing together the polymer in a cell with the monomer or oligomer which can be in liquid or gaseous form,
b) irradiation by means of a high energy ion beam of at least 1 MeV/a.m.u., chosen from among oxygen, neon, argon, xenon, krypton and uranium at a fluence between 10⁸ and 10¹⁴ ions/cm² and at a temperature kept constant throughout the irradiation time,
c) separation of the monomer which has not reacted by means of a solvent (a.m.u. = atomic mass unit).

2. Process for the production of grafted copolymers having a grafted anisotropic structure obtained by reacting with one another at least one polymer and a monomer or an oligomer under the effect of high energy ion beams and comprising the following successive stages:
a) irradiation of the polymer by means of a high energy ion beam of at least 1 MeV/a.m.u., chosen from among oxygen, neon, argon, xenon, krypton and uranium at a fluence between 10⁸ and 10¹⁴ ions/cm² and at a temperature kept constant throughout the irradiation time and
b) immersion of the thus irradiated polymer in a monomer or oligomer solution for several hours or the bringing together of the thus irradiated polymer in a cell with the monomer or oligomer, which can be in liquid or gaseous form.

3. Process according to any one of the preceding claims, characterized in that the polymer is in the form of a film, sheet or plate and is chosen from among polyolefins and their derivatives, polydienes and their copolymers, halocarbon polymers and their copolymers, polyesters, polystyrene and its derivatives, polyacrylonitrile and its derivatives, polyamides, polyimides, polysulphones, polysulphides, polyketones, polyetherketones, polysiloxanes, polyepoxides, polyurethanes, cellulose and its derivatives.

4. Process according to claim 3, characterized in that the polymer is chosen from among polyvinyl chloride, polyvinyl fluoride, polytetrafluoroethylene, polyvinylidene fluoride, polyvinylidene chloride, methyl polyacrylate, methyl polymethacrylate, polyether imide and phenylene polysulphide.

5. Process according to any one of the preceding claims, characterized in that the monomer is chosen from within the group of hydrocarbons and/or halogenated hydrocarbons having at least one unsaturation and optionally an already functionalized supplementary group, or which is functionalizable during a subsequent stage.

6. Process according to claim 5, characterized in that the monomer is chosen from among ethylene, tetrafluoroethylene and its derivatives, butadiene and its derivatives, styrene and its derivatives, acrylamide and its derivatives, acrylonitrile, allyl glycidyl ether, vinyl pyridine and its derivatives, acrylic and methacrylic acid esters, N-vinyl pyrrolidone and N-vinyl caprolactame.

7. Process according to claim 6, characterized in that the monomer is hydroxyethyl methacrylate or dimethyl aminoethyl methacrylate.

8. Process according to claim 1, characterized in that the solvent used for separating the monomer is toluene, xylene, benzene or acetonitrile.

9. Process according to either of the claims 1 and 2, characterized in that the integrated dose is approximately 10³ to 10⁷ Gy (10⁻¹ to 10³ Mrads).

10. Process according to either of the claims 1 and 2, characterized in that the grafts fixed to the polymers have functions which can be modified chemically, electrochemically or by irradiation.

11. Process according to any one of the claims 1 to 10, characterized in that the polymer is in the form of a film, sheet or plate.

## Patentansprüche

1. Verfahren zur Herstellung von Pfropfcopolymeren, die eine anisotrope gepfropfte Struktur haben, welche durch Umsetzen von mindestens einem Polymer und einem Monomer oder einem Oligomer unter der Wirkung von Ionenstrahlen hoher Energie erhalten werden, wobei das Verfahren die folgenden aufeinanderfolgenden Schritte umfaßt:
a) Eintauchen des Polymers in eine Lösung von Monomer oder Oligomer während mehrerer Stunden oder Zusammenbringen des Polymers in einer Zelle mit dem Monomer oder dem Oligomer, die in flüssiger oder gasförmiger Form vorliegen können,
b) Bestrahlung des Ganzen mittels einem Strahl aus Ionen mit einer Energie von mindestens 1 MeV/ u.m.a., ausgewählt aus Sauerstoff, Neon, Argon, Xenon, Krypton und Uran, bei einem Fluß von 10⁸ bis 10¹⁴ Ionen/ cm², bei einer Temperatur, die während der Dauer der Bestrahlung konstant gehalten wird,
c) Abtrennung des Monomers, das nicht reagiert hat, mittels eines Lösungsmittels (u.m.a. = atomare Masseneinheit).

2. Verfahren zur Herstellung von Pfropfcopolymeren, die eine anisotrope gepfropfte Struktur haben, welche durch Umsetzen von mindestens einem Polymer und einem Monomer oder einem Oligomer unter der Wirkung von Ionenstrahlen hoher Energie erhalten werden, wobei das Verfahren die folgenden aufeinanderfolgenden Schritte umfaßt:
a) Bestrahlung des Polymers mittels einem Strahl aus Ionen mit einer Energie von mindestens 1 MeV/ u.m.a., ausgewählt aus Sauerstoff, Neon, Argon, Xenon, Krypton und Uran, bei einem Fluß von 10⁸ bis 10¹⁴ Ionen/ cm², bei einer Temperatur, die während der Dauer der Bestrahlung konstant gehalten wird, und
b) Eintauchen des derart bestrahlten Polymers in eine Lösung von Monomer oder Oligomer während mehrerer Stunden oder Zusammenbringen des derart bestrahlten Polymers in einer Zelle mit dem Monomer oder dem Oligomer, die in flüssiger oder gasförmiger Form vorliegen können.

3. Verfahren nach einem der vorhergehenden Ansprüche, dadurch gekennzeichnet, daß das Polymer in der Form eines Films, einer Folie oder Platte vorliegt und ausgewählt wird aus den Polyolefinen und ihren Derivaten, den Polydienen und ihren Copolymeren, den Halogenkohlenstoffpolymeren und ihren Copolymeren, den Polyestern, dem Polystyrol und seinen Derivaten, dem Polyacrylnitril und seinen Derivaten, den Polyamiden, den Polyimiden, den Polysulfonen, den Polysulfiden, den Polyketonen, den Polyether-ketonen, den Polysiloxanen, den Polyepoxiden, den Polyurethanen, der Zellulose und ihren Derivaten.

4. Verfahren nach Anspruch 3, dadurch gekennzeichnet, daß das Polymer ausgewählt wird aus Polyvinylchlorid, Polyvinylfluorid, Polytetrafluorethylen, Polyvinylidenfluorid, Polyvinylidenchlorid, Poly(acrylsäuremethylester), Poly(methacrylsäuremethylester), Polyetherimid und Polyphenylensulfid.

5. Verfahren nach einem der vorhergehenden Ansprüche, dadurch gekennzeichnet, daß das Monomer ausgewählt wird aus der Gruppe der Kohlenwasserstoffe und/oder der halogenierten Kohlenwasserstoffe, die mindestens eine ungesättigte Bindung und gegebenenfalls eine zusätzliche Gruppe umfassen, die bereits funktionalisiert ist oder in einem weiteren Schritt funktionalisiert werden kann.

6. Verfahren nach Anspruch 5, dadurch gekennzeichnet, daß das Monomer ausgewählt wird aus: Ethylen, Tetrafluorethylen und ihren Derivaten, Butadien und seinen Derivaten, Styrol und seinen Derivaten, Acrylamid und seinen Derivaten, Acrylnitril, Allylglycidylether, Vinylpyridin und seinen Derivaten, den Estern der Acrylsäure und der Methacrylsäure, N-Vinylpyrrolidon und N-Vinylcaprolactam.

7. Verfahren nach Anspruch 6, dadurch gekennzeichnet, daß das Monomer Hydroxyethylmethacrylat oder Dimethylaminoethylmethacrylat ist.

8. Verfahren nach Anspruch 1, dadurch gekennzeichnet, daß das Lösungsmittel, welches zum Abtrennen des Monomers verwendet wird, Toluol, Xylol, Benzol oder Acetonitril ist.

9. Verfahren nach einem der Ansprüche 1 und 2, dadurch gekennzeichnet, daß die Gesamtdosis in der Größenordnung von 10³ bis 10⁷ Gy (10⁻¹ bis 10³ Mrad) ist.

10. Verfahren nach einem der Ansprüche 1 und 2, dadurch gekennzeichnet, daß die auf den Polymeren aufgepfropften Gruppen Funktionen besitzen, die auf chemischen oder elektrochemischen Weg oder durch Bestrahlung verändert werden können.

11. Verfahren nach einem der Ansprüche 1 bis 10, dadurch gekennzeichnet, daß das Polymer in der Form eines Films, einer Folie oder einer Platte vorliegt.
